# EUROPÄISCHE PATENTSCHRIFT

(11) **EP 1 846 217 B1**
(45) Veröffentlichungstag und Bekanntmachung des Hinweises auf die Patenterteilung: **03.06.2009**
(21) Anmeldenummer: 06724383.2
(22) Anmeldetag: 18.04.2006
(51) Int. Cl.: B29C 45/44, B29C 33/44

(54) **KUNSTSTOFF-SPRITZGUSSWERKZEUG**
PLASTICS INJECTION MOULD
OUTIL DE MOULAGE DE PLASTIQUE PAR INJECTION

(30) Priorität: 03.05.2005 DE 102005021011; 04.05.2005 DE 102005021351
(43) Veröffentlichungstag der Anmeldung: 24.10.2007
(73) Patentinhaber: Zimmermann Formenbau GmbH, 35075 Gladenbach-Erdhausen (DE)
(72) Erfinder: DREWLIES, Klaus-Dieter, 35075 Gladenbach (DE)
(74) Vertreter: Jochem, Bernd
(86) Internationale Anmeldenummer: PCT/EP2006/003517
(87) Internationale Veröffentlichungsnummer: WO 2006/117068

(56) Entgegenhaltungen:
- PATENT ABSTRACTS OF JAPAN Bd. 1995, Nr. 11, 26. Dezember 1995 (1995-12-26) & JP 07 223244 A (SUZUKI MOTOR CORP), 22. August 1995 (1995-08-22)
- PATENT ABSTRACTS OF JAPAN Bd. 007, Nr. 183 (M-235), 12. August 1983 (1983-08-12) & JP 58 084740 A (HONDA ENGINEERING KK; others: 01), 20. Mai 1983 (1983-05-20)
- PATENT ABSTRACTS OF JAPAN Bd. 008, Nr. 270 (M-344), 11. Dezember 1984 (1984-12-11) & JP 59 142110 A (TOYODA GOSEI KK), 15. August 1984 (1984-08-15)

## Beschreibung

Die Erfindung betrifft ein Kunststoff-Spritzgußwerkzeug mit einer vorderen und einer hinteren Werkzeughälfte, die im geschlossenen Zustand zwischen sich einen Formhohlraum begrenzen, wobei die hintere Werkzeughälfte wenigstens einen durch ihren vorderen Teil gebildeten Auswerfer, der durch einen Linearantrieb begrenzt vorschiebbar ist, und wenigstens einen durch eine Schrägführung geführten Schrägschieber aufweist.

Bei den bekannten Kunststoff-Spritzgußwerkzeugen zur Herstellung von hohlen oder gewölbten Werkstücken ist üblicherweise die als Kern bezeichnete hintere Werkzeughälfte, die der Innenwand des Werkstücks ihre Form gibt, auf einem brückenartigen, sogenannten Unterbau befestigt, der seinerseits auf einer Basis bzw. Grundplatte abgestützt ist, die mit einer Aufspannplatte der Spritzgußmaschine zu verbinden ist (vgl. Patent Abstracts of Japan zu JP 07223244A, JP 58084740A und JP 59142110A). Der brückenartige Unterbau wird gebraucht, um darunter einen Bewegungsraum zu erhalten für eine Auswerferplatte, die durch einen am brückenartigen Unterbau abgestützten Linearantrieb mit einem bestimmten Hub vor und zurück bewegbar und über Schubstangen mit den Auswerfern und Schrägschiebern verbunden ist. Indem die die Schrägschieber bewegenden Schubstangen mit Bezug auf die Vorschubrichtung geneigt angeordnet und in sich entsprechend schräg durch den brückenartigen Unterbau erstreckenden Bohrungen längsverschieblich geführt sind, verlagern sie die Schrägschieber während des Vorschubs der Auswerferplatte seitwärts, so daß sie sich aus Vorsprüngen bzw. Hinterschneidungen der Seitenwand des Werkstücks zurückziehen können und dieses schließlich vom Kern der Form abgehoben und ausgeworfen werden kann. Die Schräglage der Schubstangen der Schrägschieber bedingt eine verhältnismäßig große Auswerferplatte und daher auch einen entsprechend großen Hohlraum, der überbrückt werden muß.

In der US 5 922 368 A ist ein derartiges konventionelles Spritzgußwerkzeug der eingangs bezeichneten Art beschrieben, bei dem der mittlere vordere Bereich des Kerns die Schrägschieber überdeckt und als Auswerfer dient.

Die bekannte Bauart der Kunststoff-Spritzgußwerkzeuge mit einer unterhalb eines brückenartigen Unterbaus bewegbaren Auswerferplatte und Schubstangen hat den Nachteil, daß die Herstellung des Werkzeugs aus einer Vielzahl von beweglichen Teilen kompliziert und sehr aufwendig ist, wobei außerdem die Gefahr der Durchbiegung des brückenartigen Unterbaus und der Verformung der verhältnismäßig langen Schubstangen besteht.

Der Erfindung liegt deshalb die Aufgabe zugrunde, ein in seinem gesamten Aufbau einfachere und wesentlich kostengünstiger herzustellendes Spritzgußwerkzeug der eingangs genannten Art zur Verfügung zu stellen.

Vorstehende Aufgabe wird erfindungsgemäß dadurch gelöst, daß der Auswerfer als Mitnehmer ausgebildet ist, der an seiner Rückseite über eine sich in einem bestimmten Winkel zur Bewegungsrichtung des Linearantriebs erstreckende Querführung mit dem Schrägschieber verbunden ist.

Vorteilhafte Weiterbildungen der Erfindung sind Gegenstand der abhängigen Ansprüche.

Das neue Spritzgußwerkzeug bietet den Vorteil, daß die bisher übliche Auswerferplatte und damit auch der brückenartige Unterbau entfallen können. Die Funktion der Auswerferplatte, über Schubstangen die Schrägschieber in Richtung quer zur Vorschubrichtung des Auswerfers anzutreiben, übernimmt der Auswerfer in Verbindung mit Querführungen an seiner Rückseite und den an einem fest mit der hinteren Aufspannplatte verbundenen Werkzeugteil angebrachten Schrägführungen. Es braucht somit im Extrem nur noch ein einziges vorgeschobenes Teil des Kerns des Werkzeugs zu geben, vorzugsweise den mittleren vorderen, als Kernkappe zu bezeichnenden Kernbereich. Die Schrägschieber werden von der Kernkappe über die Querführungen in Vorschubrichtung mitgenommen und bei dieser axialen Bewegung durch die Schrägführungen längs der Querführungen in Querrichtung verschoben. Außer einer oder mehreren Kolben- oder sonstigen Schubstangen, die sich im wesentlichen nur durch den fest mit der Aufspannplatte verbundenen Teil des Kerns zu erstrecken brauchen und in passenden Bohrungen in dem Kern geführt sind, gibt es keine weiteren Schubstangen, insbesondere keine mit komplizierter, beweglicher Lagerung zum Antrieb der Schrägschieber. Die Querführungen und Schrägführungen der Schrägschieber können z. B. als T-Führungen oder Schwalbenschwanzführungen ausgebildet sein, werden nur quer zu ihrer Längserstreckung auf Zug beansprucht und bieten große Anlageflächen, so daß selbst bei großen Entformungswinkeln keine Gefahr der Überlastung und Deformation besteht. Daher kann der Auswerferhub gegenüber dem herkömmlichen Konzept verkürzt werden.

Der vorzugsweise einteilige Auswerfer in Form der Kernkappe besteht aus dem gesamten mittleren vorderen Bereich oder einem vorderen Teilbereich des Kerns und erstreckt sich so weit über die Schrägschieber, daß diese mit ihm über die Querführungen verbunden werden können. Infolge der Größe und ungeteilten Ausführung der Kernkappe ergeben sich weniger Trennlinien auf der Werkstückinnenseite im Frontbereich, so daß eine bessere Oberflächenqualität der mit dem Spritzgußwerkzeug hergestellten Erzeugnisse erzielt wird. Eine weitere Qualitätsverbesserung ergibt sich aus dem Wegfall der bisher erforderlichen Stangenverbindungen zwischen der Auswerferplatte und den Schiebern, denn die Längenausdehnung der Stangen konnte bisher zu Abzeichnungen führen. Schließlich bietet auch die durch den Wegfall der Auswerferplatte mögliche vollflächige rückseitige Abstützung der den Kern tragenden Platte die Gewähr für ein steifes, formgenaues Werkzeug, da, anders als bei einem auf einem brückenartigen Unterbau montierten Kern, die Gefahr einer Durchbiegung mit Sicherheit ausgeschlossen ist.

Mit dem Übergang auf das neu vorgeschlagene Werkzeugkonzept ist im Vergleich zur herkömmlichen Bauform mit Auswerferplatte keine Funktionseinschränkung verbunden. Im Gegenteil, da die durch Schienen gebildeten Schrägführungen eine stärkere Neigung mit Bezug auf die Vorschubrichtung haben können als die bisher verwendeten Schubstangen zur Bewegung der Schrägschieber, lassen sich eine Verkürzung des Auswerferhubs und eine kürzere Zykluszeit realisieren. Schließlich ist noch die gute Niederhaltefunktion der Kernkappe, welche in der Schließstellung des Formwerkzeugs die Schrägschieber in ihre hintere bzw. äußere Endstellung drückt, zu erwähnen.

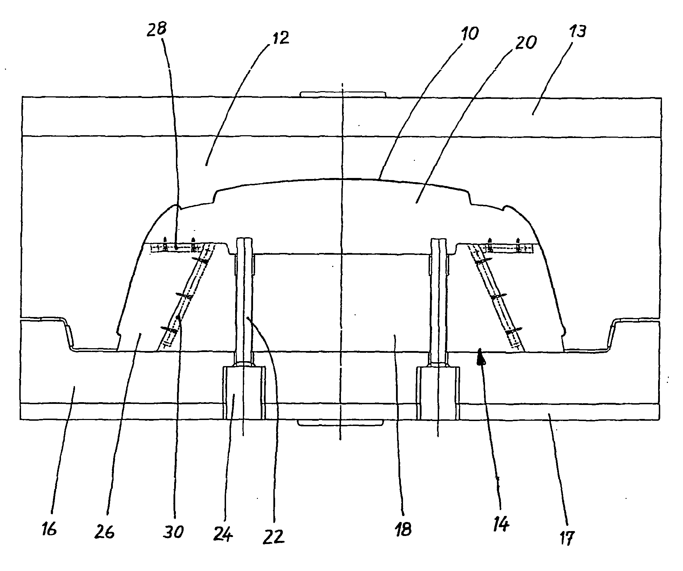

Die Erfindung wird nachstehend anhand eines in der Zeichnung dargestellten Ausführungsbeispiels näher erläutert. Die Darstellung zeigt einen vereinfachten Längsschnitt ohne Schraffur durch ein Kunststoff-Spritzgußwerkzeug zur Herstellung eines Kraftfahrzeug-Stoßfängers. Das Werkzeug ist im geschlossenen Zustand dargestellt. Es ist so groß, daß der mit 10 bezeichnete Formhohlraum, in den der flüssige Kunststoff eingespritzt wird, nur als ein etwas dickerer Linienzug erscheint. Man erkennt, daß er die Form des Profils eines von seinem linken bis zum rechten Ende reichenden Kraftfahrzeug-Stoßfängers hat.

Der Formhohlraum ist insgesamt nach vorn und seitlich nach außen konvex gekrümmt. Da seine seitlichen Enden, wie gezeigt, nach einwärts gekrümmt und ggf. seitliche Hinterschneidungen vorhanden sind, muß das Formwerkzeug mit Schiebern ausgebildet sein, um nach dem Spritzvorgang das erzeugte Werkstück aus dem Formwerkzeug auswerfen zu können.

In an sich bekannter Weise besteht das Spritzgußwerkzeug aus einer vorderen Werkzeughälfte 12 und einer hinteren Werkzeughälfte 14. Die vordere, auch als Matrize bezeichnete Werkzeughälfte 12 gibt der Vorder- und Außenseite des Stoßfängers die vorbestimmte Form. Die vordere Werkzeughälfte 12 ist in herkömmlicher Weise ausgebildet und an einer mit einer feststehenden, ersten Aufspannplatte (nicht gezeigt) der Spritzgußmaschine zu verbindenden Grundplatte 13 angebracht. Normalerweise steht die Matrize fest, da sich auf dieser Seite des Werkzeugs die Spritzdüsen mit Zufuhrleitungen befinden.

Die Erfindung betrifft den Aufbau der hinteren Werkzeughälfte 14, d. h. den Kern, der der Innenseite des Werkstücks ihre Form gibt. Der Kern 14 ist fest verbunden mit einer Kernplatte 16 und diese mit einer Grundplatte 17. Zusammen bilden sie eine mit einer zweiten, ebenfalls nicht gezeigten Aufspannplatte der Spritzgußmaschine zu verbindende Basis. Die Kernplatte 16 ist somit auf ihrer gesamten Rückseite abgestützt und daher optimal biegesteif. Zum Öffnen und Schließen des Werkzeugs wird die Basis 16, 17 mit dem Kern 14 durch die sie tragende, antreibbare Aufspannplatte der Spritzgußmaschine vor und zurück verschoben. Der vordere, kappenförmige Teil 20 des Kerns 14 liegt in dem dargestellten, geschlossenen Zustand des Formwerkzeugs an der vorderen Fläche eines mit der Kernplatte 16 verbundenen Werkzeugteils 18 an und stützt sich an diesem axial ab. Die Kernkappe 20 ist ein verhältnismäßig großer Teil des Spritzgußwerkzeugs. Sie dient als Auswerfer und ist zu diesem Zweck mit den vorderen Enden der Kolbenstangen 22 von zwei in die Basis 16, 17 integrierten Hydraulikzylindern 24 fest verbunden. Die Kolbenstangen 22 sind in sich in Vorschubrichtung erstreckenden, passenden Bohrungen in dem Werkzeugteil 18 längsverschieblich geführt.

Bei dem axial nach vorne gerichteten Auswerferhub nimmt die Kernkappe 20 die im Beispielsfall gezeigten zwei Schrägschieber 26 axial mit, da diese jeweils über eine Querführung 28, z. B. eine T-Führung, axial fest mit ihr verbunden sind. Anstelle der T-Führung 28 könnte auch eine Schwalbenschwanz- oder andere geeignete Geradführung vorhanden sein. Die Querführung 28 besteht z. B. aus paarweise zusammenwirkenden, passenden Führungsschienen, deren eine jeweils an der Rückseite der Kernkappe 20 und deren andere an der Vorderseite der Schrägschieber 26 fest angebracht, z. B. angeschraubt, ist. Alternativ könnte z. B. das Führungsprofil unmittelbar in wenigstens eines der beiden Werkzeugteile 20, 26 eingearbeitet sein.

Eine weitere Führung ist jeweils zwischen dem auf der Kernplatte 16 befestigten Werkzeugteil 18 und jedem der Schrägschieber 26 vorgesehen. Es handelt sich jeweils um eine geradlinige Schrägführung 30, die in Vorschubrichtung zur Mitte des Werkzeugs hin geneigt ist. Für die praktische Ausbildung der Schrägführung 30 gilt das zur Querführung 28 Gesagte entsprechend.

Das gezeigte Spritzgußwerkzeug arbeitet wie folgt:
Nach einem Spritzvorgang öffnet sich das Werkzeug, indem die hintere Werkzeughälfte 14 nach hinten - in der Zeichnung nach unten - weggezogen wird. Um den erzeugten Stoßfänger auszuwerfen, stoßen die Hydraulikzylinder 24, ggf. bereits während des Öffnens des Werkzeugs, über ihre Kolbenstangen 22 die Kernkappe 20 nach vorne. Dabei werden auch die Schrägschieber 26 über die Querführungen 28 mitgenommen. Bei ihrer Vorwärtsbewegung gleiten die Schrägschieber 26 jeweils entlang ihrer Schrägführung 30 nach innen näher an die Mittellängsachse des Werkzeugs heran, wobei auch eine Bewegung längs der Querführungen 28 erfolgt. Dadurch ziehen sich die Schrägschieber 26 aus den seitlichen Ausbuchtungen und Hinterschneidungen des geformten Werkstücks zurück, so daß dieses vom Kern 14 gelöst und ausgeworfen werden kann.

Es versteht sich, daß zahlreiche Variationen und Ergänzungen des gezeigten Spritzgußwerkzeugs möglich sind, ohne von dem beanspruchten Grundprinzip des Werkzeugaufbaus gemäß der Erfindung abzuweichen. So besteht z. B. die Möglichkeit, anstatt der Hydraulikzylinder 24 Pneumatikzylinder oder elektrisch angetriebene Vorschuborgane, z.B. mit einer rotierend angetriebenen Gewindespindel, die jeweils mit einer an der Kernkappe 20 drehfest gehaltenen Mutter zusammenwirkt, zu benutzen. Alternativ könnten auch nur die seitlichen Bereiche der gezeigten Kernkappe 20 als Auswerfer ausgebildet sein, während der zentrale Bereich der Kernkappe 20 mit dem Werkzeugteil 18 fest verbunden ist. In einer weiteren Modifikation erstrecken sich die Querführungen nicht senkrecht zur Bewegungsrichtung des Auswerfers, sondern unter einem von 90° nach oben oder unten abweichenden Winkel.

Je nach der Form des Werkstücks gestattet der Erfindungsgedanke außerdem, soweit notwendig oder zweckmäßig, die Anordnung eines oder mehrerer zusätzlicher Auswerfer, die z. B. ebenfalls durch Hydraulikzylinder angetrieben werden und im vorgeschobenen Zustand der Kernkappe 20 über deren vordere Fläche hinaus vorgeschoben werden können, um das geformte Werkstück von der verhältnismäßig großen Kernkappe 20 abzulösen. Selbstverständlich können auch alle sonstigen im herkömmlichen Formenbau üblichen Maßnahmen getroffen werden, wenn sie sich mit dem vorstehend dargestellten, neuen Konzept für den Antrieb der Schrägschieber mittels eines oder mehrerer Auswerfer 20 vereinbaren lassen.

## Patentansprüche

1. Kunststoff-Spritzgußwerkzeug mit einer vorderen und einer hinteren Werkzeughälfte (12, 14), die im geschlossenen Zustand zwischen sich einen Formhohlraum (10) begrenzen, wobei die hintere Werkzeughälfte (14) wenigstens einen durch ihren vorderen Teil gebildeten Auswerfer (20), der durch einen Linearantrieb (22, 24) begrenzt vorschiebbar ist, und wenigstens einen durch eine Schrägführung (30) geführten Schrägschieber (26) aufweist, **dadurch gekennzeichnet, daß** der Auswerfer (20) als Mitnehmer ausgebildet ist, der an seiner Rückseite über eine sich in einem bestimmten Winkel zur Bewegungsrichtung des Linearantriebes (22, 24) erstreckende Querführung (28) mit dem Schrägschieber (26) verbunden ist.

2. Kunststoff-Spritzgußwerkzeug nach Anspruch 1, mit einer die formgebenden Werkzeugteile (18, 20, 26) der hinteren Werkzeughälfte (14) tragenden Kernplatte (16), **dadurch gekennzeichnet, daß** die Kernplatte (16) rückseitig vollflächig gelagert und der Linearantrieb (22, 24) an einer die Kernplatte (16) tragenden Platte (17) oder einem mit dieser fest verbundenen Teil (16, 18) der hinteren Werkzeughälfte (14) abgestützt ist.

3. Kunststoff-Spritzgußwerkzeug nach Anspruch 2, **dadurch gekennzeichnet, daß** der Linearantrieb (22, 24) wenigstens einen Hydraulikzylinder (24) mit einem Kolben und einer Kolbenstange (22) aufweist, die in einem auf der Kernplatte (16) befestigten Werkzeugteil (18) geführt und an ihrem vorderen Ende mit dem Auswerfer (20) verbunden ist.

4. Kunststoff-Spritzgußwerkzeug nach einem der Ansprüche 1 bis 3, **dadurch gekennzeichnet, daß** sich die Querführung (28) unter einem rechten Winkel zur Bewegungsrichtung des Linearantriebs (22, 24) erstreckt.

5. Kunststoff-Spritzgußwerkzeug nach Anspruch 1, **dadurch gekennzeichnet, daß** die Querführung (28) zwischen dem Auswerfer (20) und dem Schrägschieber (26) und/oder die Schrägführung (30) zwischen dem Schrägschieber (26) und einem auf der Kernplatte (16) befestigten Werkzeugteil (18) T-Führungen sind.

## Claims

1. A plastic injection molding tool, comprising a front and a rear tool half (12, 14) which, in the closed state, delimit a hollow molding chamber (10) between them, wherein the rear tool half (14) has at least one ejector (20), which is constituted by its front portion and can be shifted to a limited extent by a linear drive mechanism (22, 24), and at least one oblique slide (26), which is guided by means of an oblique guide element (30), **characterized in that** the ejector (20) is designed as a carrier, whose rear is connected with the oblique slide (26) by means of a transverse guide element (28) extending at a defined angle in respect to the movement direction of the linear drive mechanism (22, 24).

2. The plastic injection molding tool in accordance with claim 1, having a core plate (16) supporting the shaping tool elements (18, 20, 26) of the rear tool half (14), **characterized in that** the core plate (16) is seated on its entire rear surface, and the linear drive mechanism (22, 24) is supported on a plate (17) supporting the core plate (16), or on a portion (16, 17) of the rear tool half (14) which is fixedly connected with that plate (17).

3. The plastic injection molding tool in accordance with claim 2, **characterized in that** the linear drive mechanism (22, 24) has at least one hydraulic cylinder (24) with a piston and a piston rod (22), which is guided in a tool element (18) fastened on the core plate (16) and is connected at its front end with the ejector (20).

4. The plastic injection molding tool in accordance with one of claims 1 to 3, **characterized in that** the transverse guide element (28) extends at right angles in regard to the movement direction of the linear drive mechanism (22, 24).

5. The plastic injection molding tool in accordance with claim 1, **characterized in that** the transverse guide element (28) between the ejector (20) and the oblique slide (26), and/or the oblique guide element (30) between the oblique slide (26) and a tool element (18) fastened on the core plate (16), are T-guidance devices.

## Revendications

1. Outil de moulage par injection de matière plastique comportant une moitié d'outil avant et une moitié d'outil arrière (12, 14) formant entre elles, à l'état fermé, une cavité de moule (10),
la moitié arrière de moule (14) comportant au moins un éjecteur (20) formé par sa partie avant, cet éjecteur étant avancé de manière limitée par un moteur linéaire (22, 24), et au moins un poussoir incliné (26) guidé par un guide incliné (30),
**caractérisé en ce que**
l'éjecteur (20) est réalisé sous la forme d'un organe d'entraînement relié sur son côté arrière au poussoir incliné (26) par un guide transversal (28) faisant un certain angle par rapport à la direction de mouvement du moteur linéaire (22, 24).

2. Outil de moulage par injection de matière plastique selon la revendication 1, comportant une platine (16) portant les parties d'outil de moulage (18, 20, 26) de la moitié arrière (14) de l'outil,
**caractérisé en ce que**
la platine (16) est montée par la surface complète de son côté arrière, et le moteur linéaire (22, 24) est appuyé contre une plaque (17) portant la platine (16) ou a une partie (16, 18) de la moitié arrière d'outil (14), reliée solidairement à la plaque.

3. Outil de moulage par injection de matière plastique selon la revendication 2,
**caractérisé en ce que**
le moteur linéaire (22, 24) comprend au moins un vérin hydraulique (24) muni d'un piston et d'une tige de piston (22), cette tige étant guidée dans une partie d'outil (18) fixée à la platine (16), et son extrémité avant est reliée à l'éjecteur (20).

4. Outil de moulage par injection de matière plastique selon les revendications 1 à 3,
**caractérisé en ce que**
le guide transversal (28) fait un angle droit par rapport à la direction de déplacement du moteur linéaire (22, 24).

5. Outil de moulage par injection de matière plastique selon la revendication 1,
**caractérisé en ce que**
le guide transversal (28) entre l'éjecteur (20) et le poussoir incliné (26) et/ou le guide incliné (30) entre le poussoir incliné (26) et une partie d'outil (18) fixée à la platine (16) sont des guides en T.
